# EUROPEAN PATENT SPECIFICATION

(11) **EP 1 184 114 B1**
(45) Date of publication and mention of the grant of the patent: **03.11.2004**
(21) Application number: 01107731.0
(22) Date of filing: 30.03.2001
(51) Int. Cl.: B23B 51/02, C22C 29/02

(54) **Hole forming tool**
Bohrwerkzeug
Outil de forage

(30) Priority: 31.08.2000 JP 2000264591; 26.03.2001 JP 2001088501
(43) Date of publication of application: 06.03.2002
(73) Proprietor: MITSUBISHI MATERIALS CORPORATION, Tokyo 100-8117 (JP); MMC Kobelco Tool Co., Ltd., Akashi, Hyogo 674-0071 (JP)
(72) Inventor: Suzuki, Katsuyuki, Mitsubishi Materials Corp., Godo-cho, Anpachi-gun, Gifu 503-2394 (JP); Kawano, Seigou, MMC Kobelco Tool Co., Ltd., Akashi, Hyogo 674-0071 (JP)
(74) Representative: HOFFMANN - EITLE

(56) References cited:
- EP-A- 0 937 781
- US-A- 2 731 711
- US-A- 4 556 347
- US-A- 4 826 368
- US-A- 5 230 593
- US-A- 5 762 538
- PATENT ABSTRACTS OF JAPAN vol. 1995, no. 06, 31 July 1995 (1995-07-31) -& JP 07 080714 A (KOBE STEEL LTD), 28 March 1995 (1995-03-28)
- PATENT ABSTRACTS OF JAPAN vol. 005, no. 047 (M-061), 28 March 1981 (1981-03-28) -& JP 56 003118 A (MITSUBISHI METAL CORP), 13 January 1981 (1981-01-13)
- PATENT ABSTRACTS OF JAPAN vol. 007, no. 071 (M-202), 24 March 1983 (1983-03-24) -& JP 57 211406 A (TOSHIAKI HOSOI), 25 December 1982 (1982-12-25)

## Description

The present invention relates to hole forming tools as disclosed in the preamble of claim 1. Such hole forming tools are known from document US-A-5230593.

This specification is on the basis of Japanese Patent Applications (Japanese Unexamined Patent Application Publication No. 11-244120, No. 2000-004058, No. 2000-093834, and No. 2000-099648), and the disclosures of these Japanese Patent Applications are incorporated herein as a part of this specification by reference.

Conventionally, in a case of forming a hole in a die constructed of, for example a tool steel for cold dies, heat treatment was performed after the hole forming process. Accordingly, tools for typical steels were used. To satisfy a demand to reduce the period for processing and thereby reduce costs, however, a method in which the hole forming process is performed after the heat treatment has become increasingly common. In such a case, it is inefficient to form the hole by electrical discharge machining. Accordingly, drills for hard steels are used, which are capable of cutting hard steels of which the hardness is approximately 40 to 60 HRC, and 70 HRC at maximum.

These drills have been used for forming shallow holes only, of which the ratio of the hole depth L and the outside diameter of the drills D, L/D, is 3 or less. Techniques for forming such holes are disclosed in, for example, Japanese Unexamined Patent Application Publications Nos. 7-80714 and 7-112311.

With respect to conventional drills for hard steels of which the hardness exceeds 40 HRC, there has been a disadvantage in that wearing, chipping, and fracture of cutting edges easily occur. Thus, the cutting edges were quickly abraded and the tool life was reduced. To avoid this, drills according to the above-described publications are designed such that a helix angle of chip discharging grooves is small, such as 10° to 20°, while a helix angle of drills for typical steels is approximately 20° to 30°. Alternatively, the drills are designed such that a core diameter is larger than 0.3D, in which D represents the outside diameter of the drills. These designs may also be applied in combination. Accordingly, the rigidity of the drills is increased and the tool life is maintained.

When, for example, finishing processing is to be performed after the hole forming process, a hole formed by the above-described drills for hard steels will be a primary hole. Accordingly, in addition to the maintenance of the tool life, high cutting accuracy is also required. The above-described drills, however, are designed merely for increasing the rigidity thereof by decreasing the helix angle of the chip discharging grooves and by increasing the core diameter. Although such a construction reduces the risk of causing fracture of the cutting edges or breakage of the drills, there is a disadvantage in that the cutting force is increased and the sharpness of the cutting edges is degraded. As a result, the cutting accuracy is degraded.

Document US-A-5,230,593 describes a twist drill which includes a cylindrical body having an axis of rotation therethrough. In order to provide a greater torsional rigidity of the body, the body has a web thickness T of 15 to 30 % of the drill diameter D and a flute-width ratio A/B of 0.4 to 0.9 cf. column 4, lines 23 to 26. Additionally, the entire surface of the drill body is coated with a hard coating cf. column 4, lines 46 to 52. Further, the radical rake angle δ of the cutting lip 12 at its outer end is set to a range between -10° to -20°, and the ratio of a length L₁ between the axis O of rotation and the intersection P to a length L₂ between the intersection P and the outermost end Q of the cutting lip 12 is set to range between 0.4:1 and 0.7:1 cf. column 7, lines 28 to 33 and Figs. 6 and 11 of D1.

Accordingly, in consideration of the above-described circumstances, it is an object of the present invention to provide a hole forming tool of which the tool, life is increased without degrading the cutting accuracy. This object is solved by the feature combination of claim 1. Preferred embodiments are described in dependent claims 2-4.

Basically, according to the present invention, a hole forming tool which rotates around a rotational axis includes: one or more chip discharging grooves which are helically formed around the rotational axis in the exterior surface of the hole forming tool and one or more cutting edges which are formed along ridge lines between inner surfaces of the chip discharging grooves, which are facing the rotating direction, and flank faces formed at an end of the hole forming tool. In addition, a radial rake angle of the cutting edges is set to a negative value in the range of -5° to -10°, and a point angle is in the range of 125° to 135°.

When the radial rake angle of the cutting edges is in the above-described range, the cutting force is reduced and fracture of the cutting edges is prevented. In addition, satisfactory sharpness of the cutting edges will be ensured. The value of the radial rake angle may be positive in a case of forming a hole in typical steels such as carbon steels, etc. However, in a case of cutting hard steels of which the hardness is, for example, over 40 HRC, fracture of cutting edges easily occurs when the value of the radial rake angle is higher than -5°. When the value of the radial rake angle is lower than -10°, the cutting force increases so that the cutting accuracy will be degraded.

When the point angle is smaller than 125°, vibration easily occurs, especially in the case of cutting a hard steel. In addition, a time interval will be long in which the cutting edges are not completely led into a work material and in which the cutting is unstable. When the point angle is larger than 135°, the hole forming tool cannot smoothly penetrate into the work material. In either case, the fineness of the formed hole will be degraded.

By setting the point angle in the range of 125° to 135°, , the time interval in which the cutting is unstable is reduced. In addition, the hole forming tool may smoothly penetrate into the work material. Accordingly, the degradation of the fineness of the formed hole is prevented.

In addition, according to the present invention, the hole forming tool may have one or more of the following characteristics.

According to a first characteristic, a groove width ratio of the hole forming tool is in the range of 0.9 to 1.1.

When the groove width ratio is smaller than 0.9, the chips will clump inside the chip discharging grooves due to the lack of space. When the groove width ratio is larger than 1.1, the rigidity of the hole forming tool will be reduced. In either case, the fineness of the formed hole will be degraded and breakage of the hole forming tool will occur.

By setting the groove width ratio in the range of 0.9 to 1.1, the clumping of the chips due to the lack of space is prevented, and sufficient rigidity of the hole forming tool is ensured. Accordingly, the fineness of the formed hole is maintained and breakage of the hole forming tool is prevented.

According to a second characteristic, a core diameter of the hole forming tool is in the range of 0.38D to 0.42D. in which D is a cutting edge diameter of the hole forming tool.

When the core diameter is smaller than 0.38D, the flexural rigidity of the tool will be insufficient, and when the core diameter is larger than 0.42D, the space inside the chip discharging grooves will be too small so that the chips will clump therein.

By setting the core diameter in the range of 0.38D to 0.42D, the flexural rigidity of the tool is ensured, and clumping of the chips, which increases the cutting force, is prevented. Accordingly, the fineness of the formed hole and the tool life are maintained.

According to a third characteristic, a helix angle of the chip discharging grooves may be in the range of 5° to 15°.

When the helix angle is smaller than 5°, the sharpness of the cutting edges and the ability to discharge the chips are degraded, so that fracture of the hole forming tool will occur. When the helix angle is larger than 15°, the torsional rigidity will be insufficient so that the fineness of the formed hole will be degraded.

By setting the helix angle in the range of 5° to 15°, fracture of the hole forming tool, which is caused by the degradations of the sharpness of the cutting edges and of the ability to discharge the chips, is prevented. In addition, sufficient torsional rigidity is ensured so that , the fineness of the formed hole is maintained.

According to a fourth characteristic, the hole forming tool of the present invention is constructed of a cemented carbide, and an average particle diameter of WC, which is contained in the cemented carbide, may be in the rage of 0.1 to 1.0 µm.

When the cemented carbide in which the average particle diameter of WC is small is used, the radial rake angle may be set to a higher value, which improves the sharpness of the cutting edges. In addition, the toughness and the resistance to fracture of the hole forming tool are enhanced, so that the cutting accuracy and the tool life may be increased.

According to a fifth characteristic, at least a part including the chip discharging grooves of the hole forming tool is coated with a layer constructed of a hard material, for example, a titanium compound.

By coating the hole forming tool with, for example. TiAlN which is a nitride, the friction between the chips and the chip discharging grooves will be reduced, so that the load including cutting torque, thrust, etc., will also be reduced. As a result, the cutting edges will have further resistance to fracture and the tool life will be increased.

According to a sixth characteristic, the main body of said hole forming tool is constructed of a cemented carbide which comprises 10 ±2 wt% Co, 0.65 ±0.25 wt% Cr, WC for the balance, and inevitable impurities.

By using the above described cemented carbide, in which the rigidity is high, as the material, the rigidity of the main body of the hole forming tool is ensured. In addition, when the average particle diameter of WC is particularly small such as 0.1 to 1.0 µm, the versatility of shapes of the cutting edges will be increased. Accordingly, durability of the hole forming tool is ensured even when the radial rake angle is in the range of -5° to -10° , and fracture of the tool is prevented.
Fig. 1 is an end view of a drill according to an embodiment of the present invention;
Fig. 2 is a side view of a cutting portion of the drill according to the embodiment of the present invention;
Fig. 3 is a cross sectional view of the drill according to the embodiment of the present invention, which is cut along a plane perpendicular to the central axis;
Fig. 4 is a side view of the drill according to the embodiment of the present invention;
Fig. 5 is a graph showing results of a first test in which examples of the present invention and comparative examples were compared.
Fig. 6 is a schematic representation showing results of a second test in which examples of the present invention and comparative examples were compared.
Figs. 7A and 7B are graphs showing results of a third test in which examples of the present invention and comparative examples were compared.

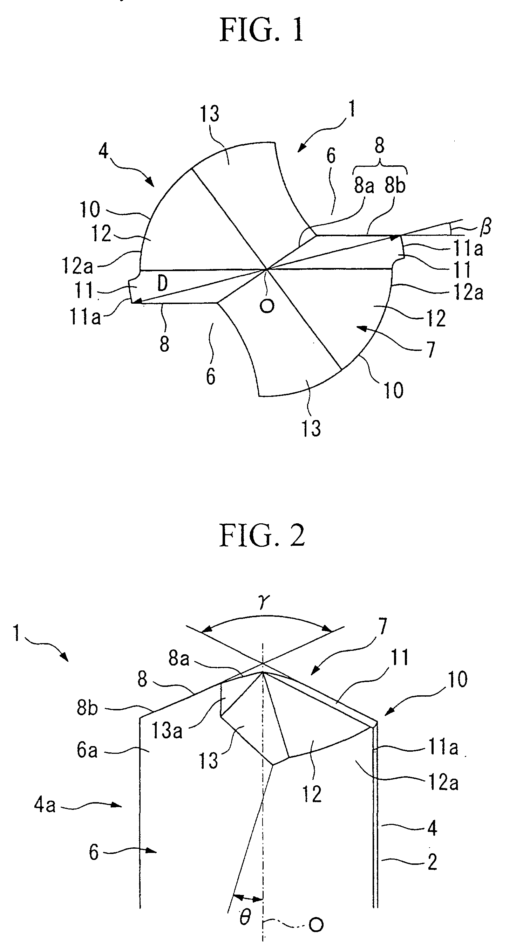

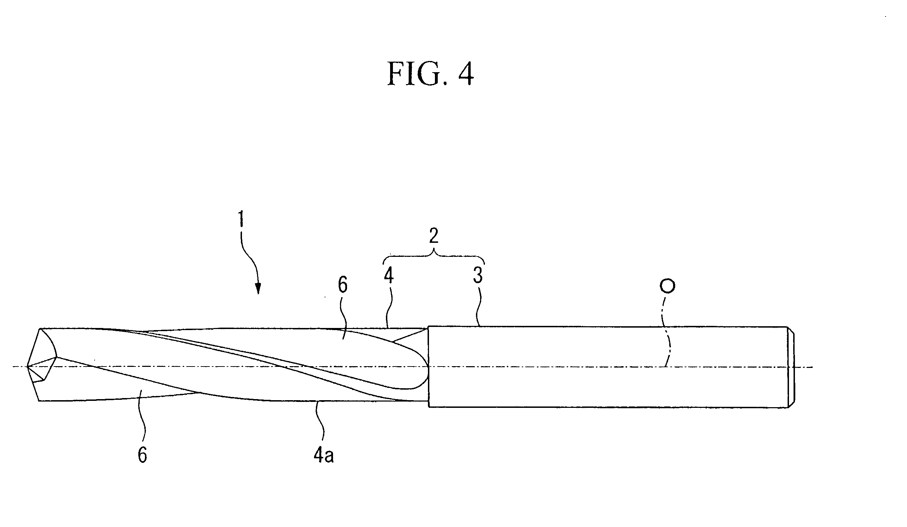

An embodiment of the present invention will be described below with reference to Figs. 1 to 4, in which a drill 1 according to the present embodiment is shown. The drill 1 has a shape of a rod and is constructed of a cemented carbide as described below. A main body 2 of the drill 1 includes a shank portion 3 and a cutting portion 4. Two chip discharging grooves 6 and 6 are helically formed in an exterior surface 4a of the cutting portion 4 in a rotationally symmetrical manner around a rotational axis O of the main body 2.

As shown in Figs. 1 and 2, cutting edges 8 and 8 are formed along ridge lines between inner surfaces 6a and 6a of the chip discharging grooves 6 and 6. which are facing the rotating direction, and an end surface 7 of the cutting portion 4.

As shown in Fig. 1, each of the cutting edges 8 and 8 includes a central portion 8a and a peripheral portion 8b. The central portion 8a has a shape of an approximately straight line and radially extends from the rotational axis O. The peripheral portion 8b also has a shape of an approximately straight line, and extends to the periphery of the cutting portion 4 in a manner such that the central portion 8a and the peripheral portion 8b form an obtuse angle. In Fig. 1, the central portion 8a and the peripheral portion 8b are smoothly connected, and the connecting part has a shape of an arc. The present invention, however, is not limited to this. The central portion 8a and the peripheral portion 8b may also be angularly connected, forming an obtuse angle therebetween (for example, 150° to 170°).

The end surface 7 of the cutting portion 4 has a pair of land portions 10 and 10 which are formed in a rotationally symmetrical manner. Each of the land portions 10 and 10 has a vertex at a point on which the rotational axis O crosses the end surface 7, and approaches the other end of the drill 1 toward the periphery of the end surface 7. Each of the land portions 10 and 10 form flank faces of the cutting edges 8, which includes a second flank face 11 and a third flank face 12. The second flank face is formed in the front region in the rotating direction, and has a positive and relatively small relief angle α1. The third flank face 12 is formed in the rear region of the second flank face 11 in the rotating direction, and has a relatively large relief angle α2 (> α1). In addition, a thinning surface 13 is formed in the region still farther to the rear, and has a relief angle α3 which is larger than α2.

In the present embodiment, the flank faces in the end surface 7 are formed by planes including the second flank face 11 and the third flank face 12, as shown in Fig. 1. The present invention, however, is not limited to this. A conical flank face, or flank faces having other adequate shapes may also be adopted.

Each of the inner surfaces 6a and 6a at the ends of the chip discharging grooves 6 and 6 forms a rake surface of the peripheral portion 8b of each of the cutting edges 8. In addition, a step surface 3a between the second flank face 11 in one land portion 10 and the thinning surface 13 in the other land portion 10 extends toward the shank portion 3 of the drill 1, forming a rake surface of the central portion 8a.

The second flank faces 11 and 11 are protruding in the radial direction relative to the periphery of the third flank faces 12 and 12, forming margins 11a and 11a having a small width. The margins 11a and 11a extend along the chip discharging grooves 6 and 6 over the exterior surface 4a of the cutting portion 4. The maximum outside diameter (cutting edge diameter) D of the cutting portion 4 represents the distance between the peripheral ends of the cutting edges 8 and 8, which are at the front ends of the margins 11a and 11a in the rotating direction (see Fig. 1).

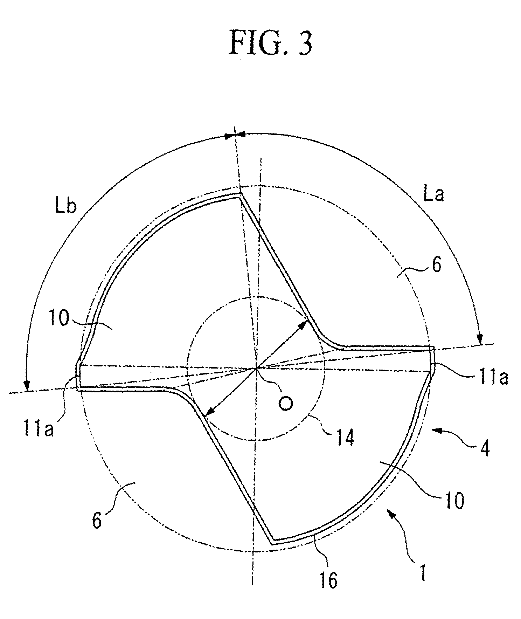

In Fig. 3, La is a distance along an arc around the chips discharging groove 6, when the center of the arc is on the central axis. In addition, Lb is a distance along an arc at the periphery of the land portion 10. A groove width ratio La/Lb is in the range of 0.9 to 1.1. When the groove width ratio is smaller than 0.9, the width of the chip discharging grooves 6 and 6 will be too small, and the ability to discharge chips will be degraded. As a result, there will be a problem in that the chips will clump inside the chip discharging grooves 6 and 6. when the groove width ratio is larger than 1.1, the ability to discharge chips will be improved; however, the rigidity of the drill 1 will be reduced. In either case, there will be disadvantages in that the cutting accuracy will be degraded and the breakage of the drill 1 will easily occur.

As shown in Fig. 1 and Fig. 3, the land portions 10 and 10 are separated by the pair of chip discharging grooves 6 and 6. A diameter of a core 14 in the middle of the land portions 10 and 10 is in the range of 0.38D to 0.42D, in which D is the cutting edge diameter representing the distance between the peripheral ends of the cutting edges 8 and 8. When the core diameter is smaller than 0.38D, the flexural rigidity of the main body 2 will be reduced. When the core diameter is larger than 0.42D, the depth of the chip discharging grooves 6 and 6 will be small and the space therein will be insufficient, so that the chips will clump inside the chip discharging grooves 6 and 6. increasing the cutting force. As a result, fracture and wearing of the cutting edges 8 and 8 will occur. Accordingly, there will be problems in that the cutting accuracy will be degraded and the tool life will be reduced in either case.

The chip discharging grooves 6 and 6 are helically formed around the rotational axis O in the inverse direction of the rotating direction toward the shank portion 3 of the main body. Referring to Fig. 2, a helix angle θ of the chip discharging grooves relative to the rotational axis O is in the range of 5° to 15°, when the drill is seen from the side. When the helix angle θ is smaller than 5°, inclination of the chip discharging grooves 6 and 6 including the inner surfaces 6a and 6a. which form the rake surfaces, will be too small. Thus, the sharpness of the cutting edges will be degraded. In addition, the helix angle θ will be too small relative to the direction in which the chips are generated by the cutting edges 8 and 8, so that the ability to discharge the chips will also be degraded. Accordingly, the cutting force will be increased and fracture of the cutting edges 8 and 8 will easily occur. When the helix angle θ is larger than 15°, the torsional rigidity of the drill will be too small so that the cutting accuracy will be degraded, especially in the case of forming a hole in a hard steel.

With reference to Fig. 2, a point angle γ between the lines extended from the cutting edges 8 and 8 in the end surface 7 of the main body 2 is in the range of 125° to 135°. When the point angle γ is smaller than 125°, vibration easily occurs during the hole forming process, especially in the case of cutting a hard steel. In addition, a time interval will be long in which the cutting edges 8 and 8 are not completely led into a work material, and in which the cutting is not stably performed. When the point angle γ is larger than 135°, the drill cannot smoothly penetrate into the work material. In either case, fineness of the formed hole will be degraded.

With reference to Fig. 1, a radial rake β is set to a negative value in a range of -5° to -10°, particularly at the peripheral portion 8b of the cutting edge 8. When the value of the radial rake angle β is higher than -5°, fracture of the cutting edges 8 and 8 will easily occur. When the value of the radial rake angle β is lower than -10°, there will be a problem in that the accuracy of the hole position will be degraded due to the cutting force.

According to the present embodiment, at least the cutting edges 8 and 8 or the cutting portion 4 of the main body 2 are constructed of the cemented carbide, which preferably comprises 10 ±2 wt% Co, 0.65 ±0.25 wt% Cr tungsten carbide (WC) for the balance, and inevitable impurities. The average particle diameter of the tungsten carbide (WC), which is the main component of the cemented carbide. is in the range of 0.1 to 1.0 µm.

With respect to conventional drills constructed of a cemented carbide, the composition of the cemented carbide was 9% Co, 8.1% TiC, 9.9% TaC, 1.1% NbC, and WC for the balance. In addition, the average particle diameter of WC, which is the main component of this cemented carbide, was in the range of approximately 2 to 3 µm. In such a case, the value of the radial rake angle must be lower than -25° to avoid fracture of the cutting edges. Accordingly, since the value of the radial rake angle was set to such a low value, the sharpness of the cutting edges was not sufficient.

In contrast, according to the drill 1 of the present embodiment, the average particle diameter of WC is reduced, so that the radial rake angle may be set to a higher value, in the range of -5° to -10°. Accordingly, the sharpness of the cutting is improved. In addition, the versatility regarding the shape of the cutting edges is increased, and the resistance to fracture is maintained.

As shown in Fig. 3, the surface of the cutting portion 4 is coated with a layer 16, which is constructed of a hard material, for example a titanium compound. Accordingly, the resistances to fracture and to abrasion of the cutting edges , 8 and 8 are enhanced. In addition, the cutting accuracy is improved and the tool life is increased.

The performance of the drill 1, which has the above-described construction, is considered below in the case in which a hole is formed in a hard material of which the hardness after the heat treatment is higher than 40 HRC. The main body 2 of the drill 1 is rotated around the rotational axis O, and is moved toward the work material in the direction of the rotational axis O. Since the point angle γ of the cutting portion 4 is in the range of 125° to 135°, the drill 1 smoothly penetrates into the work material. In addition, the rigidity of the drill is sufficient relative to the hardness of the work material. Accordingly, fracture of the cutting edges 8 and 8 is prevented. Moreover, the average particle diameter of WC comprised in the cutting edges 8 and 8 is set to a small value such as 0.1 to 1.0 µm, and the radial rake angle β is set to a small and negative value such as -5° to -10°. Accordingly, fracture of the cutting edges 8 and 8 is prevented and the cutting force is reduced. In addition, the sharpness of the cutting edges 8 and 8 is ensured.

In addition, since the core diameter is in the range of 0.38D to 0.42D, the rigidity of the main body 2 is ensured and the space inside the chip discharging grooves 6 and 6 is sufficient.

Since the work material is a hard die steel, chips generated by the cutting edges 8 and 8 are crumbled into small pieces and do not elongate in a helical manner. In addition, the groove width ratio is in the range of 0.9 to 1.1. Thus, despite the helical angle of the chip discharging grooves 6 and 6 being set to a relatively small value such as 5° to 15°, the chips do not easily clump inside the grooves. Accordingly, fracture of the main body 2 due to the clumping of the chips is prevented. In addition, the rigidity of the dill 1 is ensured, so that the fineness of the hole is maintained.

In accordance with the drill 1 of the present embodiment, the fineness of the hole is ensured even when a shallow hole, in which L/D is 3 or smaller as in the conventional case, is formed in a hard steel of which the hardness is higher than 40 HRC. More specifically, a hole is formed in which the circularity is excellent, and in which the amount of oversizing and surface roughness is small. In addition, fracture of the cutting edges 8 and 8 is prevented, and the tool life is increased.

### (Examples)

Next, cutting tests in which samples according to the present invention are used will be described below.

The samples used in the cutting tests had basically the same construction as the drill 1 described above in the embodiment. As shown in Table 1, samples of types A and B were prepared as examples of the present invention, and samples of types C, D, and E were prepared as comparative examples.

With respect to the types A and B, the material of the samples was Z10 according to ISO, which is a cemented carbide comprising 10 ±2 wt% Co, 0.65 ±0.25 wt% Cr, WC for the balance, and inevitable impurities. The average particle diameter of WC was 1.0 µm. In addition, values of the core diameter, the groove width ratio, the ratio radial rake angle β of the cutting edges 8 and 8, the point angle γ, and the helix angle θ are shown in Table 1. With respect to the type C, the material was M20 according to ISO, which is a cemented carbide comprising 9 wt% Co, 8.1 wt% TiC, 9.9 wt% TaC, 1.1 wt% NbC, and WC for the balance. The average particle diameter of WC was 2 µm. Other variables of the type C were the same as those of the type A. With respect to the type D, variables were the same as those of the type A except that the radial rake angle β was -15° and the point angle γ was 120°. With respect to the type E, variables were the same as those of the type A except that the core diameter was 0.25D and the helix angle θ was 30°.

With respect to a work material, SKD11 according to the Japanese Industrial Standard (JIS). which is a cold die steel, was used after the heat treatment was performed. The hardness of the work material after the heat treatment was 60HRC.

**Table 1**

| | Material (ISO) | Core diameter | Groove width ratio | Radial rake angle | Point Angle | Helix angle |
|---|---|---|---|---|---|---|
| Type A (Examples) | Z10 | 0.40D | 1.0:1 | -7° | 130° | 10° |
| Type B (Examples) | Z10 | 0.38D | 1.1:1 | -7° | 130° | 10° |
| Type C (Comparative Examples) | M20 | 0.40D | 1.0:1 | -7° | 130° | 10° |
| Type D (Comparative Examples) | Z10 | 0.40D | 1.0:1 | -15° | 120° | 10° |
| Type E (Comparative Examples) | Z10 | 0.25D | 1.0:1 | -7° | 130° | 30° |

In a first test, differences in tool lives according to the material were examined. In this test, samples of the types A, B, and C were used for forming holes which penetrate through the work material. The test was performed under the following conditions. That is, the cutting edge diameter D was 3 mm, the cutting speed was 10 m/min, the feed was 0.04 mm/rev, and the cutting depth was 9 mm (L/D = 3). In addition, a soluble emulsion (10% dilution) was used as a cutting lubricant.

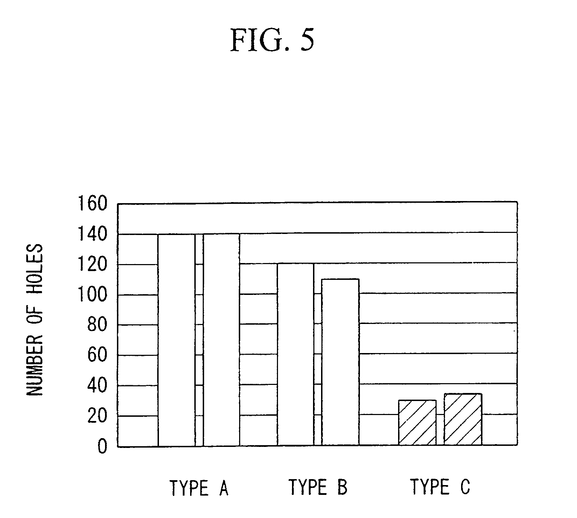

With respect to each of the types A, B and C, two samples were used in this test. The results of the test are shown in Fig. 5.

Approximately 140 holes were formed by each sample of the type A, and 110 and 120 holes were formed by the samples of the type B. After the test, normal abrasion was observed in the cutting portions 4 of the samples of the types A and B. In contrast, the samples of the type C were broken after approximately 30 holes were formed. Thus, the samples exhibited apparent differences in tool lives.

In a second test, differences in the fineness of the holes according to the radial rake angle and the point angle were examined.

In this test, samples of the types A and D were used for forming holes which penetrate through the work material. The cutting edge diameter D was 10 mm, and the cutting depth was 30 mm (L/D = 3). In addition, the soluble emulsion (10% dilution) was used as the cutting lubricant.

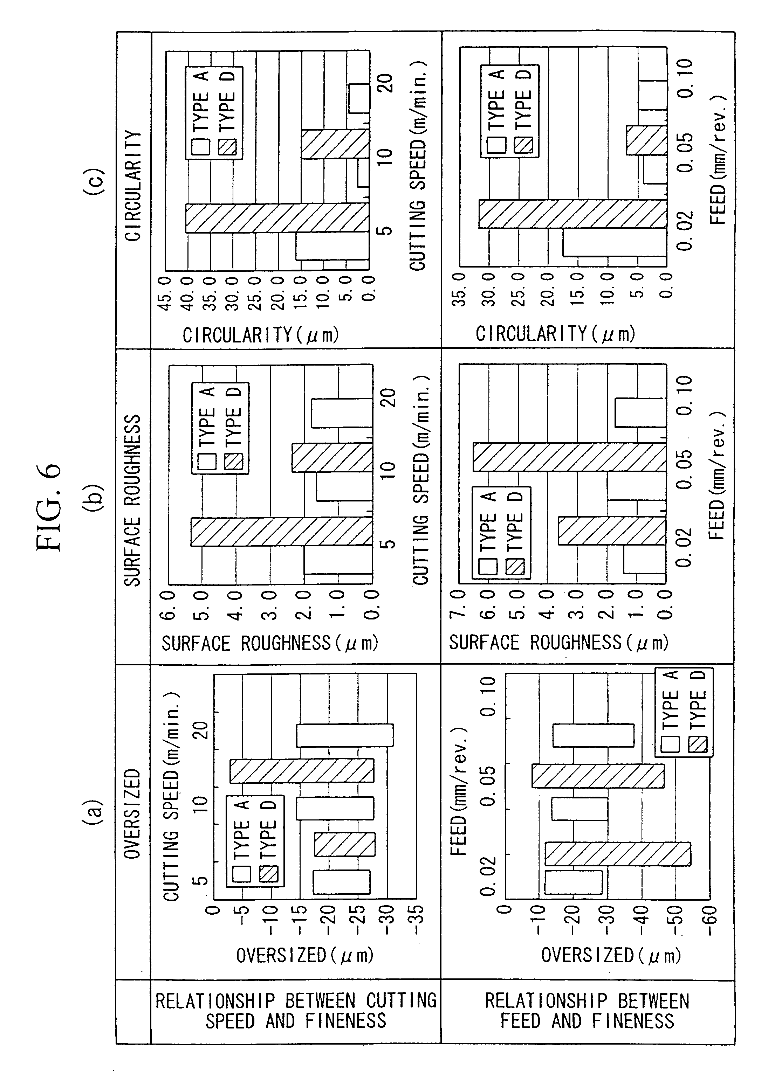

With respect to each of the types A and D, three samples were used in this test. The results of the test are shown in Fig. 6.

### (a) Comparison regarding oversizing

First, holes were formed under conditions in which the feed was fixed to 0.10 mm/rev and the cutting speed was increased from 1 to 20 m/min, and amounts of oversizing in the formed holes were measured (see the upper section in the column "oversized" in Fig. 6). Next, holes were formed under conditions in which the cutting speed was fixed to 20 m/min and the feed was increased to 0.10 mm/rev, and amounts of oversizing in the formed holes were measured (see the lower section in the column "oversize" in Fig. 6).

Degree of variation in amounts of oversizing in the holes formed by the samples of the type D was larger compared to the holes formed by the samples of the type A. In the case in which the feed was fixed, the sample of the type D broke when the cutting speed was 20 m/min, as is understood from the upper section in Fig. 6. In the case in which the cutting speed was fixed, the sample of the type D broke when the feed was 0.10 mm/rev. as is understood from the lower section in Fig. 6.

### (b) Comparison regarding surface roughness

First, holes were formed under conditions in which the feed was fixed to 0.10 mm/rev and the cutting speed was increased from 1 to 20 m/min, and surface roughnesses of the formed holes were measured (see the upper section in the column "surface roughness" in Fig. 6). Next, holes were formed under conditions in which the cutting speed was fixed to 20 m/min and the feed was increased to 0.10 mm/rev, and surface roughnesses of the formed holes were measured (see the lower section in the column "surface roughness" in Fig. 6).

Degree of variation in the surface roughnesses of the holes formed by the samples of the types D was larger compared to the holes formed by the samples of the type A. In the case in which the feed was fixed, the sample of the type D broke when the cutting speed was 20 m/min, as is understood from the upper section in Fig. 6. In the case in which the cutting speed was fixed, the sample of the type D broke when the feed was 0.10 mm/rev, as is understood from the lower section in Fig. 6.

### (c) Circularity

First, holes were formed under conditions in which the feed was fixed to 0.10 mm/rev and the cutting speed was increased from 1 to 20 m/min, and circularities of the formed holes were measured (see the upper section in the column "circularity" in Fig. 6). Next, holes were formed under conditions in which the cutting speed was fixed to 20 m/min and the feed was increased to 0.10 mm/rev, and circularities of the formed holes were measured (see the lower section in the column "circularity" in Fig. 6).

The circularities of the holes formed by the samples of the type D were larger compared to the holes formed by the samples of the type A. In the case in which the feed was fixed, the sample of the type D broke when the cutting speed was 20 m/min, as is understood from the upper section in Fig. 6. In the case in which the cutting speed was fixed, the sample of the type D broke when the feed was 0.10 mm/rev, as is understood from the lower section in Fig. 6.

In a third test, variation of amounts of abrasion in the flank face and variation of amounts of oversizing were examined.

In this test, samples of the types A and E were used for forming holes which penetrate through the work material. With respect to the work material, SKD61 according to the Japanese Industrial Standard (JIS) was used as the work material. The hardness of the work material after the heat treatment was 50 HRC. The outside diameter D was 10 mm, the cutting speed was 30 m/min, the feed was 0.10 mm/rev, and the cutting depth was 30 mm (L/D = 3). In addition, the soluble emulsion (10% dilution) was used as the cutting lubricant.

### (a) Abrasion in the flank face

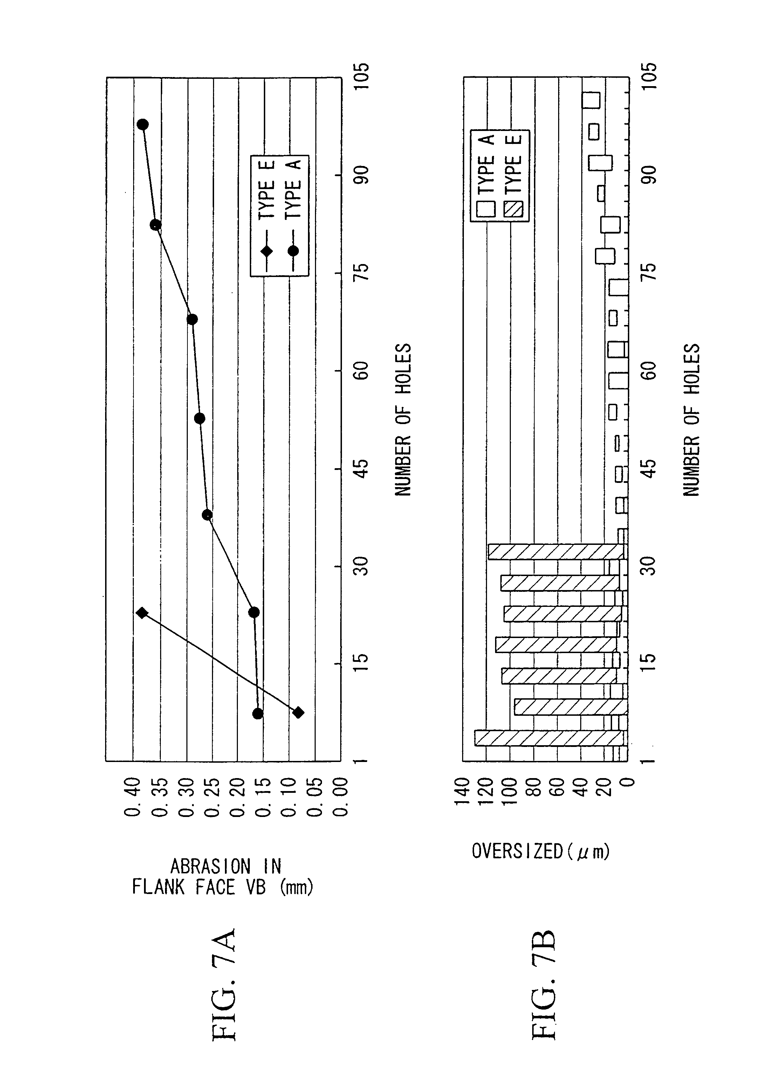

As is understood from Fig. 7A, the amount of abrasion in the sample of the type A after forming 100 holes (approximately 0.39 mm) and the amount of abrasion in the sample of the type E after forming 22 holes were approximately the same. At this time, normal abrasion was observed in the samples of both types, and the samples were not broken. The tool life of the sample of the type A was 3.5 times longer than that of the type E.

### (b) Oversized

As shown in Fig 7B, the amounts of oversizing caused in the holes formed by the sample of the type A were significantly less compared to the holes formed by the sample of the type E. Although the sample of the type E broke after forming approximately 30 holes, the sample of the type A could form more than 100 holes.

From the results of the above-described first to third tests, it is understood that the fineness of the holes is improved and the tool life is increased by using the samples of the types A and B, which were prepared as examples of the present invention. In addition, it was proved that the material, the radial rake angle, the point angle, the core diameter, and the helix angle greatly affect the fineness of the holes and the tool life.

Although the drill 1 according to the embodiment of the present invention was a unitary type, the present invention is not limited to this. A drill of a brazed type, throwaway type, etc., may also be used as long as the cutting edges 8 and 8 are constructed of the cemented carbide having the above-described composition.

In addition, the work material is not limited to hard steels. The present invention may also be applied in the process of forming a hole in a steel of which the hardness is 40 HRC or less.

In addition, the present invention is not limited to drills, and may be applied in various hole forming tools.

## Claims

1. A hole forming tool (1) which rotates around a rotational axis (O), comprising:
one or more chip discharging grooves (6) which are helically formed around the rotational axis (O) in the exterior surface (4a) of said hole forming tool (1); and
one or more cutting edges (8) which are formed along ridge lines between inner surfaces (6a) of said chip discharging grooves (6), which are facing the rotating direction, and flank faces (11) formed at an end of said hole forming tool (1),
**characterized in that**
a radial rake angle (β) of said cutting edges (8) is set to a negative value in a range of -5° to -10°, and
a point angle (γ) is in a range of 125° to 135°, and
a groove width ratio is in a range of 0.9 to 1.1, and
a core diameter is in a range of 0.38D to 0.42D in which D is a cutting edge diameter of said hole forming tool, and
a helix angle (θ) of said chip discharging grooves (6) is in a range of 5° to 15°.

2. A hole forming tool (1) according to claim 1, wherein at least parts including said cutting edges (8) are constructed of a cemented carbide and an average particle diameter of WC, which is comprised in said cemented carbide, is in range of 0.1 to 1.0 µm.

3. A hole forming tool (1) according to claim 1 or 2, wherein the main body (2) of said hole forming tool (1) is constructed of a cemented carbide which comprises 10±2 wt% Co, 0.65±0.25 wt% Cr, WC for the balance, and inevitable impurities.

4. A hole forming tool (1) according to claim 1, 2 or 3, wherein at least a part including said chip discharging grooves (6) of said hole forming tool (1) is coated with a layer (16) constructed of a hard material.

## Patentansprüche

1. Werkzeug (1) zum Ausbilden von Öffnungen, welches Werkzeug sich um eine Drehachse (O) herum dreht, mit:
zumindest einer Spanabführnut (6), welche schraubenförmig um die Drehachse (O) in der Außenfläche (4a) des Werkzeugs (1) herum ausgeformt ist; und
zumindest einer Schneidkante (8), die entlang von Kantenlinien zwischen Innenflächen (6a) der Spanabführnuten (6), die zur Drehrichtung hinweisen, und Flankenflächen (11) ausgeformt ist, die an einem Ende des Werkzeugs (1) zum Ausbilden von Öffnungen ausgeformt sind,
**dadurch gekennzeichnet, dass**
ein radialer Spanwinkel (β) der Schneidkanten (8) auf einen negativen Wert in einem Bereich von -5° bis -10° festgelegt ist, ein Spitzenwinkel (γ) in einem Bereich von 125° bis 135° liegt, ein Nutbreitenverhältnis in einem Bereich von 0,9 bis 1,1 liegt, ein Kerndurchmesser in einem Bereich von 0,38 D bis 0,42 D liegt, wobei D ein Schneidkantendurchmesser des Werkzeugs ist, und ein Schraubenwinkel (θ) der Spanabführnuten (6) in einem Bereich von 5° bis 15° liegt.

2. Werkzeug (1) zum Ausbilden von Öffnungen nach Anspruch 1, bei welchem zumindest diejenigen Teile, die die Schneidkanten (8) beinhalten, aus einem Hartmetall aufgebaut sind, und ein durchschnittlicher Partikeldurchmesser von WC, das sich in diesem Hartmetall befindet, in einem Bereich von 0,1 bis 1,0 µm liegt.

3. Werkzeug (1) zum Ausbilden von Öffnungen nach Anspruch 1 oder 2, bei welchem der Hauptkörper (2) des Werkzeugs (1) aus einem Hartmetall aufgebaut ist, das 10 ± 2 Gew-% Co, 0,65 ± 0,25 Gew-% Cr, WC als Ausgleich und unvermeidbare Unreinheiten aufweist.

4. Werkzeug (1) zum Ausbilden von Öffnungen nach Anspruch 1, 2 oder 3, bei welchem zumindest derjenige Teil des Werkzeugs (1), der die Spanabführnuten (6) beinhaltet, mit einer Schicht (16) aus einem harten Material beschichtet ist.

## Revendications

1. Outil de forage (1) tournant autour d'un axe de rotation (0), comprenant :
une ou plusieurs rainures (6) d'évacuation des copeaux qui sont formées en hélice autour de l'axe de rotation (0) dans la surface extérieure (4a) dudit outil de forage (1) ; et
un ou plusieurs bords de coupe (8) qui sont formés selon les lignes d'arête entre les surfaces intérieures (6a) desdites rainures (6) d'évacuation des copeaux, qui font face à la direction de rotation, et les faces de flanc (11) formées à une extrémité dudit outil de forage (1),
**caractérisé en ce que**
un angle de coupe radial (β) desdits bords de coupe (8) est fixé à une valeur négative dans une fourchette de -5° à -10°, et
un angle de pointe (ν) est dans une fourchette de 125° à 135°, et
un rapport de largeur de rainure est dans une fourchette de 0,9 à 1,1, et
un diamètre d'âme est dans une fourchette de 0,38 D à 0,42 D, dans lequel D est un diamètre de bord de coupe dudit outil de forage, et
un angle d'hélice (θ) desdites rainures (6) d'évacuation des copeaux est dans une fourchette de 5° à 15°.

2. Outil de forage selon la revendication 1, dans lequel au moins les parties comprenant lesdits bords de coupe (8) sont constituées de carbure cémenté et un diamètre moyen des particules de carbure de tungstène qui sont comprises dans ledit carbure cémenté est dans une fourchette de 0,1 à 1,0 µm.

3. Outil de forage (1) selon la revendication 1 ou 2, dans lequel le corps principal (2) dudit outil de forage (1) est constitué de carbure cémenté qui comprend 10 ± 2 % en poids de cobalt, 0,65 ± 0,25 % en poids de chrome, le reste en carbure de tungstène et les inévitables impuretés.

4. Outil de forage selon la revendication 1, 2 ou 3, dans lequel au moins une partie comprenant lesdites rainures (6) d'évacuation des copeaux dudit outil de forage (1) sont revêtues d'une couche (16) constituée d'un matériau dur.
